# EUROPÄISCHE PATENTSCHRIFT

(11) **EP 3 094 941 B1**
(45) Veröffentlichungstag und Bekanntmachung des Hinweises auf die Patenterteilung: **25.07.2018**
(21) Anmeldenummer: 15709404.6
(22) Anmeldetag: 13.01.2015
(51) Int. Cl.: F41A 19/12, F16C 17/08, F16C 25/02

(54) **ABZUGSSYSTEM EINER SCHUSSWAFFE**
TRIGGER SYSTEM FOR A FIREARM
SYSTÈME DE DÉTENTE POUR ARME À FEU

(30) Priorität: 14.01.2014 DE 102014100377
(43) Veröffentlichungstag der Anmeldung: 23.11.2016
(73) Patentinhaber: J.G. Anschütz GmbH & Co. KG, 89079 Ulm (DE)
(72) Erfinder: WILCZEK, Frederik, 89143 Blaubeuren (DE); DANGEL, Achim, 89129 Langenau/Göttingen (DE)
(74) Vertreter: Meyer, Thorsten
(86) Internationale Anmeldenummer: PCT/DE2015/100018
(87) Internationale Veröffentlichungsnummer: WO 2015/106759

(56) Entgegenhaltungen:
- EP-A2- 1 369 660
- DE-A1-102005 045 919
- DE-C- 145 485
- US-A- 5 755 518

## Beschreibung

Die Erfindung betrifft ein Abzugssystem einer Schusswaffe, mit einem Abzugshebel und einem mit diesem verbundenen Abzugszüngel, wobei der Abzugshebel in einem Abzugsgehäuse verschwenkbar gelagert ist.

Derartige Abzugssysteme kommen insbesondere im Sport bei hochpräzisen Schusswaffen zum Einsatz, beispielsweise bei nationalen und internationalen Wettkämpfen mit Luftgewehr oder Kleinkalibergewehr oder auch beim Biathlon. Die Schützen sind dabei mit der Waffe und deren Bedienung sehr gut vertraut und können insbesondere beim Abdrücken und Auslösen des Schusses Vorzug und Druckpunkt sehr genau fühlen. Insbesondere Veränderungen fallen den Sportlern im Wettkampf sehr unangenehm auf und können die Präzision der Schussabgabe negativ beeinflussen.

Aus der EP 1 369 660 A2 ist ein solches Abzugssystem bekannt.

Aus der EP 2 314 974 A2 ist ein Abzugssystem bekannt, bei dem vermittels versetzt zueinander angeordneter Kugeln eine Bewegung übertragen wird.

Aus der DE 10 2009 029 951 B4 ist ein Kugelkopfartig angelenktes Abzugszüngel bekannt.

Aufgabe der Erfindung ist es ein verbessertes Abzugssystem einer Schusswaffe zur Verfügung zu stellen, bei dem ein Lagerspiel verringert ist.

Diese Aufgabe wird durch ein Abzugssystem einer Schusswaffe nach den Merkmalen des Anspruchs 1 gelöst.

Erfindungsgemäß ist ein Abzugssystem einer Schusswaffe, mit einem Abzugshebel und einem mit diesem verbundenen Abzugszüngel, wobei der Abzugshebel in einem Abzugsgehäuse verschwenkbar gelagert ist und durch verschwenken den Schuss der Schusswaffe auslöst, vorgeschlagen, wobei wenigstens ein im Abzugssystem gelagertes Schwenk-Teil, umfassend den Abzugshebel und/oder eine Abzugsklinke und/oder einen Fanghebel, um eine Drehachse verschwenkbar gelagert ist,
wobei ein Lager koaxial mit der Drehachse des Schwenk-Teils durch eine Lagerkugel gebildet ist, welche zum einen zum Teil in einer Ausnehmung am Schwenk-Teil oder am Abzugsgehäuse gehalten ist und zum anderen gegen ein kreisförmiges Gegenlager am Abzugsgehäuse oder am Schwenk-Teil abgestützt ist.

Hierdurch ist auf besonders effektive Weise ein hochpräzises und sehr verschleißarmes Achslager geschaffen, was für den Schützen einen immer gleichen Abzug ermöglicht.

Der Aufbau ermöglicht sehr präzise Lager, da einerseits hochgenaue Kugeln verwendet werden können und zum anderen sehr genaue Auflageflächen bzw. -punkte Verwendung finden. Sonst übliche Achsen weisen konstruktionsbedingt ein größeres Spiel auf.

Eine vorteilhafte Ausgestaltung der Erfindung sieht vor, dass die Lagerkugel in einer zylinder- oder kegelstumpfförmigen Führungs-Ausnehmung im Schwenk-Teil bzw. im Abzugsgehäuse angeordnet ist.

Eine weitere nicht weniger vorteilhafter Ausgestaltung der Erfindung sieht vor, dass koaxial mit der Drehachse eine Druckkugel angeordnet ist, welche von innen gegen die Lagerkugel unter einer Vorspannung gehalten ist, sodass die Lagerkugel gegen das Gegenlager unter der Vorspannung gehalten ist.

Von Vorteil ist dem folgend die Druckkugel in einer eigenen mit der Führungs-Ausnehmung koaxial angeordneten oder in der Führungs-Ausnehmung der Lagerkugel angeordnet.

Bevorzugterweise ist das Lager beidseitig der Drehachse symmetrisch mit mehreren Lagerkugeln und/oder mehreren Druckkugeln ausgebildet.

Von Vorteil sind die Druckkugel/n vermittels einer konisch ausgestalteten senkrecht zur Drehachse in einem Gewinde gelagerten Pressschraube nach außen gegen die Lagerkugel/n verschoben bzw. mit einer Druckkraft gegen die Lagerkugel/n versehen sind.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines erfindungsgemäßen Abzugssystems,
- Fig. 2: das erfindungsgemäßen Abzugssystems in einer schematischen Schnitt-Darstellung in Blickrichtung II aus Fig. 1,
- Fig. 3: schematische Darstellung einer Schusswaffe mit daran verbautem erfindungsgemäßen Abzugssystem, und
- Fig. 4: eine vergrößerte Detaildarstellung des Bereichs IV aus Fig. 3.

Die in den Figuren gleichen Bezugsziffern bezeichnen gleiche oder gleich wirkende Elemente.

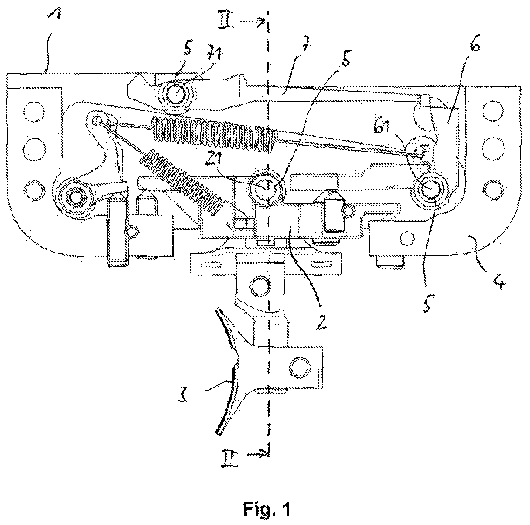

In Fig. 1 ist ein erfindungsgemäßes Abzugssystem 1 mit geöffnetem Abzugsgehäuse 4 gezeigt.

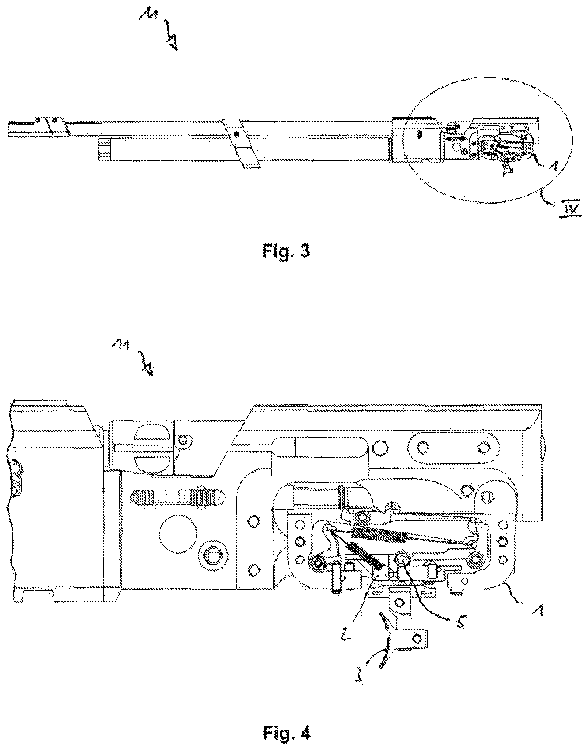

Das Abzugssystem 1 weist den üblichen mechanischen Aufbau auf. So wirkt ein Abzugshebel 2 mit einem um diesen zu betätigenden und hierzu mit diesem verbundenen Abzugszüngel 3 mit einer mit diesem mechanisch gekoppelten Abzugsklinke 6 und einem Fanghebel 7 zusammen um durch verschwenken derselben den Schuss der Schusswaffe 11 (siehe Fig. 3) auszulösen. Der Abzugshebel 2 als auch die Abzugsklinke 6 und der Fanghebel 7 sind in einem Abzugsgehäuse 4 verschwenkbar gelagert.

Somit sind der Abzugshebel 2, die Abzugsklinke 6 und der Fanghebel 7 als gelagerte Schwenk-Teile ausgestaltet, die jeweils um eine Abzugshebeldrehachse 21 eine Klinkendrehachse 61 und eine Fanghebeldrehachse 71 verschwenkbar sind.

Die Lager 5 der Drehachsen 21, 61, 71 der Schwenk-Teile sind durch eine Lagerkugel 51 gebildet, welche im gezeigten Beispiel zum einen zum Teil in einer Ausnehmung 52 am jeweiligen Schwenk-Teil gehalten ist und zum anderen gegen ein kreisförmiges Gegenlager 53 am Abzugsgehäuse 4 abgestützt ist. Erfindungsgemäß kann der Aufbau des Lagers aus so sein, dass die Lagerkugel in einer Ausnehmung am Abzugsgehäuse gehalten ist und gegen ein kreisförmiges Gegenlager am Schwenk-Teil abgestützt ist.

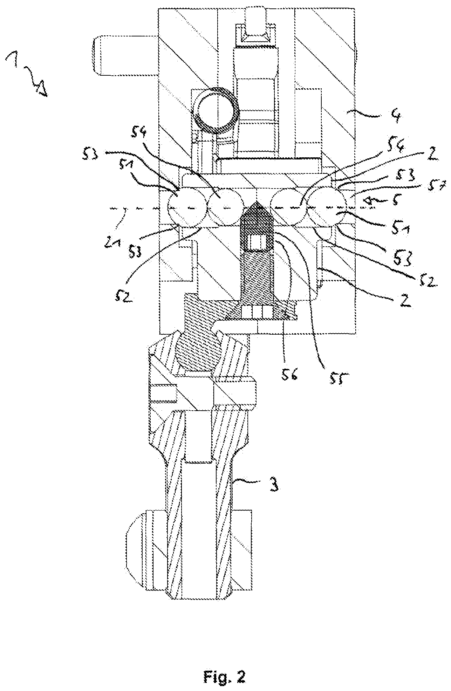

In Fig. 2 ist das Abzugssystem 1 aus Fig. 1 in einer schematischen Schnitt-Darstellung beispielhaft durch das Lager 5 der Abzugshebeldrehachse 21 in Blickrichtung II dargestellt.

Das Lager 5 ist im Beispiel symmetrisch und koaxial mit der Abzugshebeldrehachse 21 mit zwei Lagerkugeln und Gegenlagern ausgestaltet. Die Lagerkugeln 51 sind in einer zylinderförmigen Führungs-Ausnehmung 52 im Abzugshebel 2 angeordnet.

Die kreisförmigen Gegenlager 53 zur jeweiligen Lagerkugel 51 sind im Beispiel durch eine zur Abzugshebeldrehachse 21 koaxiale Bohrung 57 durch die Wandung des Abzugsgehäuses 4 geschaffen worden, deren Durchmesser kleiner sind als der Durchmesser der Lagerkugeln 51.

Koaxial mit der Abzugshebeldrehachse 21 sind Druckkugeln 54 angeordnet, welche von innen gegen die Lagerkugeln 51 unter einer Vorspannung gehalten sind, sodass die Lagerkugeln 51 gegen die Gegenlager 53 unter der Vorspannung gehalten sind.

Die Vorspannung auf die Druckkugeln 54 und damit auf die Lagerkugeln 51 wird vermittels einer konisch ausgestalteten senkrecht zur Abzugshebeldrehachse 21 in einem Gewinde 56 gelagerten Pressschraube 55 erreicht, wobei die Druckkugeln 54 nach außen gegen die Lagerkugeln 51 verschoben bzw. mit einer Druckkraft gegen die Lagerkugeln 51 versehen werden.

In Fig. 3 ist ein oben beschriebenes Abzugssystem 1 verbaut an einer Schusswaffe 11 gezeigt. Fig. 4 zeigt in einer vergrößerten Detaildarstellung den Bereichs IV aus Fig. 3 mit dem Abzugssystem 1.

### Bezugszeichenliste

- 1: Abzugssystem
- 11: Schusswaffe

- 2: Abzugshebel
- 21: Abzugshebeldrehachse

- 3: Abzugszüngel

- 4: Abzugsgehäuse

- 5: Lager
- 51: Lagerkugel
- 52: Ausnehmung
- 53: Gegenlager
- 54: Druckkugel
- 55: Pressschraube
- 56: Gewinde
- 57: Bohrung

- 6: Abzugsklinke
- 61: Klinkendrehachse

- 7: Fanghebel
- 71: Fanghebeldrehachse

## Patentansprüche

1. Abzugssystem (1) einer Schusswaffe (11), mit einem Abzugshebel (2) und einem mit diesem verbundenen Abzugszüngel (3), wobei der Abzugshebel (2) in einem Abzugsgehäuse (4) verschwenkbar gelagert ist und durch verschwenken den Schuss der Schusswaffe (11) auslöst,
wobei wenigstens ein im Abzugssystem (1) gelagertes SchwenkTeil, umfassend den Abzugshebel (2) und/oder eine Abzugsklinke (6) und/oder einen Fanghebel (7), um eine Drehachse (21, 61, 71) verschwenkbar gelagert ist, wobei ein Lager (5) koaxial mit der Drehachse (21, 61, 71) des Schwenk-Teils durch eine Lagerkugel (51) gebildet ist, welche zum einen zum Teil in einer zylinder- oder kegelstumpfförmigen Führungs-Ausnehmung (52) im Schwenkteil angeordnet ist und zum anderen gegen ein kreisförmiges Gegenlager (53) am Abzugsgehäuse (4) abgestützt ist.

2. Abzugssystem nach Anspruch 1,
**dadurch gekennzeichnet,**
**dass** koaxial mit der Drehachse (21, 61, 71) eine Druckkugel (54) angeordnet ist, welche von innen gegen die Lagerkugel (51) unter einer Vorspannung gehalten ist, sodass die Lagerkugel (51) gegen das Gegenlager (53) unter der Vorspannung gehalten ist.

3. Abzugssystem nach Anspruch 2,
**dadurch gekennzeichnet,**
**dass** das Lager (5) beidseitig der Drehachse (21, 61, 71) symmetrisch mit mehreren Lagerkugeln (51) und/oder mehreren Druckkugeln (54) ausgebildet ist.

4. Abzugssystem nach einem der Ansprüche 2 oder 3,
**dadurch gekennzeichnet,**
**dass** die Druckkugel/n (54) vermittels einer konisch ausgestalteten senkrecht zur Drehachse (21, 61, 71) in einem Gewinde (56) gelagerten Pressschraube (55) nach außen gegen die Lagerkugel/n (51) verschoben bzw. mit einer Druckkraft gegen die Lagerkugel/n (51) versehen sind.

## Claims

1. A trigger system (1) of a firearm (11), with a trigger lever (2) and a trigger shoe (3) connected thereto, wherein the trigger lever (2) is pivotably mounted in a trigger housing (4) and by pivoting triggers the shot of the firearm (11),
wherein at least one pivoting part mounted in the trigger system (1), containing the trigger lever (2) and/or a trigger pawl (6) and / or a catch lever (7), is pivotably mounted about a pivot axis (21, 61, 71), wherein a bearing (5) of the rotary axis (21, 61, 71) of the pivoting part is formed by a bearing ball (51), which is arranged on the one hand in the pivoting part, partially in a cylindrical or truncated guiding recess (52) and is supported on the other hand against a circular counterbearing (53) on the trigger housing (4).

2. A trigger system according to claim 1,
**characterised in**
**that** a pressure ball (54) is arranged coaxially with the axis of rotation (21, 61, 71), which is held pre-stressed from the inside against the bearing ball (51) so that the bearing ball (51) is held pre-stressed against the counterbearing (53).

3. A trigger system according to claim 2,
**characterised in**
**that** the bearing (5) is formed on both sides of the axis of rotation (21, 61, 71) symmetrically with a plurality of bearing balls (51) and/or a plurality of pressure balls (54).

4. A trigger system according to one of claims 2 or 3,
**characterised in**
**in that** the pressure ball (s) (54) are displaced outwards against the bearing ball (s) (51) by means of a conically pressed screw (55) mounted perpendicular to the axis of rotation (21, 61, 71) in a thread (56) or are provided with a compressive force against the bearing ball(s) (51).

## Revendications

1. Système de déclenchement (1) d'une arme à feu (11), avec un levier de déclenchement (2) et une queue de détente (3) reliée à celui-ci, dans lequel le levier de déclenchement (2) est monté pivotant dans un boîtier de déclenchement (4) et qui en pivotant déclenche le tir de l'arme à feu (11),
dans lequel au moins une pièce pivotante montée dans le système de déclenchement (1), contenant le levier de déclenchement (2) et/ou un cliquet de détente (6) et/ou un levier d'arrêt (7), est montée pivotante autour d'un axe de pivotement (21, 61, 71), dans lequel un palier (5) de l'axe de rotation (21, 61, 71) de la pièce pivotante est constitué d'une bille de roulement (51), qui est prévue d'une part dans la pièce pivotante, partiellement dans un évidement de guidage cylindrique ou tronqué (52) et est pris en charge d'autre part par un contrepalier circulaire (53) sur le boîtier de déclenchement (4).

2. Système de déclenchement selon la revendication 1,
**caractérisé en ce**
**qu'**une bille de pression (54) est disposée coaxialement à l'axe de rotation (21, 61, 71), qui est maintenue précontrainte de l'intérieur contre la bille de roulement (51) de sorte que la bille de palier (51) est maintenue précontrainte sur le contrepalier (53).

3. Système de déclenchement selon la revendication 2,
**caractérisé en ce**
**que** le palier (5) est formé de part et d'autre de l'axe de rotation (21, 61, 71) symétriquement avec une pluralité de billes de palier (51) et/ou une pluralité de billes de pression (54).

4. Système de déclenchement selon l'une des revendications 2 ou 3, caractérisé en ce
en ce que la ou les billes de pression (54) sont déplacées vers l'extérieur contre la(les) bille(s) d'appui (51) au moyen d'une vis conique (55) montée perpendiculairement à l'axe de rotation (21, 61, 71) dans un filet (56) ou sont munis d'une force de compression contre la(les) bille(s) de palier (51).
